# EUROPÄISCHE PATENTANMELDUNG

(11) **EP 0 824 101 A2**
(43) Veröffentlichungstag der Anmeldung: **18.02.1998**
(21) Anmeldenummer: 97113443.2
(22) Anmeldetag: 04.08.1997
(51) Int. Cl.: C07F 7/08, C07F 7/21, C07F 17/00

(54) **Carbosilan-Dendrimere mit Si-O-Metall-Bindungen, ein Verfahren zu deren Herstellung und deren Verwendung**

(30) Priorität: 14.08.1996 DE 19632700
(71) Anmelder: BAYER AG, 51368 Leverkusen (DE)
(72) Erfinder: Kraus, Harald, Dr., 51375 Leverkusen (DE); Mager, Michael, Dr., 51375 Leverkusen (DE)

(57) **Zusammenfassung**

Die vorliegende Erfindung betrifft neue Carbosilan-Dendrimere mit Si-O-Metall-Bindungen, ein Verfahren zu deren Herstellung sowie deren Verwendung.

## Beschreibung

Die vorliegende Erfindung betrifft neue Carbosilan-Dendrimere mit Si-O-Metall-Bindungen, ein Verfahren zu deren Herstellung sowie deren Verwendung.

Als Dendrimere bezeichnet man stark verzweigte Moleküle mit hochgeordneter meist dreidimensionaler Struktur, deren Molmasse im Bereich derer von Oligomeren oder Polymeren liegt.

Dendrimere haben jedoch den Vorteil, daß sie mit exakt einheitlicher Molmasse gezielt aufgebaut werden können, während die üblichen Polymere stets eine bestimmte Molmassenverteilung zeigen. Zudem sind bestimmte funktionelle Dendrimere, wie z. B. solche mit Vinylendgruppen, mit einer definierten Anzahl solcher reaktiver Gruppen herstellbar.

Bisher konnten nur sehr wenige Vertreter metallfunktionalisierter Carbosilan-Dendrimere hergestellt werden, die sich in der Art der Anbindung der Metallatome unterscheiden. Bekannt sind z. B. Carbosilan-Dendrimere, an die Diaminoarylnikkel(II)-komplexfragmente über Si-O-C-Brücken gebunden sind (Nature 1994, 372, 659-663), an die Chromtricarbonylfragmente über η⁶-Koordinationen an Si-Phenyl-Gruppen gebunden sind (J. Organomet. Chem. 1996, 509, 109-113) oder an die Dicobalthexacarbonylfragmente über endständige Acetylen-Si-Gruppen gebunden sind (Organometallics 1995, 14, 5362-5366). Diese Verbindungen sind interessant für katalytische Prozesse.

In der Technik werden häufig heterogene Katalysatoren auf Basis dotierter Silikate oder silikatischer Träger eingesetzt. So verwendet man z. B. für Crack- und Isomerisierungsreaktionen in der Petrochemie Alumosilikat-Zeolite oder für Oxidationsreaktionen Titansilikalite. Auch viele Metallkomplexe werden nach Anbindung an SiO₂-Trägermaterialien als heterogene Katalysatoren eingesetzt. Man nutzt dabei die Möglichkeit der Metalle, Si-O-Metall-Bindungen auszubilden.

Gegenüber silikatischen Materialien zeichnen sich metallfunktionalisierte Carboslan-Dendrimere durch eine wohldefinierte Molekülstruktur und ein optimales Oberflächen-/Volumenverhältnis aus. Ein weiterer Vorteil ist, daß alle Metallzentren an der Oberfläche der Dendrimere frei zugänglich sind. Außerdem können sie sowohl als homogene als auch heterogene Katalysatoren eingesetzt werden.

Es besteht daher ein großer Bedarf an der Bereitstellung von Carbosilan-Dendrimeren mit Si-O-Metall-Bindungen zur Immobilisierung und Trägerung katalytisch aktiver Substanzen oder zur Herstellung von anorganisch-organischen Hybridmaterialien.

Die bisher bekannten Carbosilan-Dendrimere werden ausgehend von einem Initiatorkern durch alternierende Hydrosilylierung und Grignard-Reaktion aufgebaut (z. B. US-A-5,276,110; Adv. Mater. 1993, 5, 466-468; Macromolecules 1993, 26, 963-968; J. Chem. Soc., Chem. Commun. 1994, 2575-2576; Organometallics 1994, 13, 2682-2690 und DE-P 19603242.3). Beispielsweise wird das Initiatormolekül Tetravinylsilan in THF unter Pt-Katalyse mit HSiCl₂CH₃ zur Reaktion gebracht. Durch Umsetzung mit Vinylmagnesiumhalogenid wird wiederum ein Vinylsilan aufgebaut, welches erneut für eine Hydrosilylieiung zur Verfügung steht. In analoger Weise können auch cyclische Organosiloxane als Initiatorkerne eingesetzt werden, siehe DE-P 19603241.5. Die Carbosilandendrimere eignen sich z. B. zur Herstellung von Hybridmaterialien für Beschichtungen oder aufgrund ihrer definierten Molekülstruktur als Eichsubstanzen.

Aus WO 94/06807 ist bekannt, daß durch Umsetzung von Trialkoxysilanfunktionalisierten Carbosilanen mit Metallalkoxiden, Wasser und einem Katalysator organisch-anorganische Hybridmaterialien hergestellt werden können. Infolge von Hydrolyse- und Kondensationsprozessen entstehen Disiloxan- und/oder Heterosiloxanbrücken und es bildet sich ein dreidimensionales, glasartiges Netzwerk mit polymerer Struktur aus.

Es wurde nun gefunden, daß Metallverbindungen an Carbosilan-Dendrimere über Si-O-Metall-Bindungen (Heterosiloxan-Brücken) angebunden werden können und die dabei entstehenden Verbindungen als wohldefinierte Molekulverbindungen isoliert werden können.

Gegenstand der vorliegenden Erfindung sind daher Carbosilan-Dendrimere mit Si-O-Metall-Bindungen der allgemeinen Formel

K[(CH₂)ₙSiXₐR₃₋ₐ]ᵢ

mit n = 2-6, bevorzugt n = 2, und R = C₁-C₁₈-Alkyl und/oder C₆-C₁₈-Aryl, wobei n und auch R innerhalb des Moleküls gleich oder ungleich, bevorzugt gleich, sein können, und wobei die weiteren Symbole und Indices die folgenden Bedeutungen haben:
A) K = [R₄₋ᵢSi]
   mit i = 3,4, bevorzugt 4
   oder
B) K = 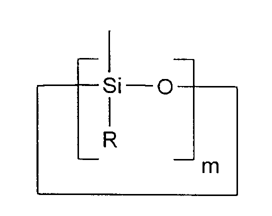 mit i = m und m = 3-6, bevorzugt m = 3,4,
   in Kombination mit
   - X: -OM für a=1
   oder
   - X: [(CH₂)ₙSi(OM)R₂], [(CH₂)ₙSiR₃₋ₐ[(CH₂)ₙSi(OM)R₂]ₐ] und/oder [(CH₂)ₙSiR₃₋ₐ[(CH₂)ₙSiR₃₋ₐ[(CH₂)ₙSi(OM)R₂]ₐ]ₐ] für a = 1-3, bevorzugt a = 3, wobei
   - M: ein Halbmetall und/oder Metall ist, das gegebenenfalls weitere Substituenten tragen kann.

Die Alkylreste R im Sinne der Erfindung sind vorzugsweise lineare oder verzweigte, gegebenenfalls substituierte C₁-C₅-Alkylreste. Der Begriff substituiert umfaßt alle gängigen Substituenten, wie z. B. Halogen, Alkyl, Amin usw.

Die Arylreste R im Sinne der Erfindung sind vorzugsweise gegebenenfalls substituierte C₆-Ringe.

In einer bevorzugten Form der vorliegenden Erfindung können die Carbosilan-Dendrimere durch folgende Formeln beschrieben werden:

Si[(CH₂)₂Si(CH₃)₂(OM)]₄,

Si[(CH₂)₂Si[(CH₂)₂Si(CH₃)₂(OM)]₃]₄,

Si[(CH₂)₃Si(CH₃)₂(OM)]₄

und/oder

[OSi(CH₃)(CH₂)₂Si(CH₃)₂(OM)]₄.

Besonders bevorzugt sind Carbosilan-Dendrimere der Formel

Si[(CH₂)₂Si(CH₃)₂(OM)]₄

Als Halbmetalle und/oder Metalle im Sinne der Erfindung kommen insbesondere B, Al, Ga, In, Ge, Sn, Pb, As, Sb, Bi, Ti, Zr, Hf, V, Nb, Ta, Cr, Mo, W, Re, Fe, Ru, Os, Rh, Ir, Pt, Cu, Ag und/oder Au in Frage.

Die Metalle und/oder Halbmetalle können einen oder mehrere für Metalle und/oder Halbmetalle gebräuchliche Substituenten tragen, beispielsweise lineare, verzweigte oder cyclische, gegebenenfalls substituierte Alkyl-, Cyclopentadienyl-, Aryl-, P-haltige Reste, wie z. B. Phosphane wie Triaryl- oder Trialkylphosphane, N-haltige Reste, wie z. B. Ethylendiamin, O-haltige Reste, wie z. B. Acetylacetonat oder Alkoholate, Halogen , wie z. B. Chlorid usw..

Die Metalle und/oder Halbmetalle können ferner jeweils zu einem oder intramolekular zu mehreren Si-Atomen des Dendrimer-Moleküls O-Brücken bilden, bevorzugt zu einem.

Bevorzugte Metalle und/oder Halbmetalle im Sinne der Erfindung sind die Elemente Ti, Zr, Hf, V, Nb, Ta, Cr, Mo, W, besonders bevorzugt Ti, Zr, Hf, ganz besonders bevorzugt Ti.

In einer bevorzugten Ausführungsform der vorliegenden Erfindung ist das Carbosilan-Dendrimer mit Si-O-Metallbindungen Si[(CH₂)₂Si(CH₃)₂(OTiCp₂Cl)]₄, das eine große Stabilität aufweist. Die angebundene Metallverbindung ist dabei die Metallocenverbindung Cp₂TiCl₂, die z. B. in Kombination mit Aluminium-organischen Verbindungen als Katalysator bei der Olefin-Polymerisation eingesetzt werden kann ("Ziegler-Natta-Katalysatoren", Römpp Chemie Lexikon, 9. Auflage, Bd 6, S.5128-5129). Auch bei Epoxidierungsreaktionen von Olefinen ist sie katalytisch aktiv, wobei die Aktivität durch Heterogenisierung auf SiO₂-Basis erhöht werden kann (Tetrahedron 51, No. 13, 3787-3792 (1995)).

Gegenstand der vorliegenden Erfindung ist zudem ein Verfahren zur Herstellung der erfindungsgemäßen Carbosilan-Dendrimere mit Si-O-Metall-Bindungen wonach ein SiOH-funktionelles Carbosilan-Dendrimer der allgemeinen Formel:

K[(CH₂)ₙSiYₐR₃₋ₐ]ᵢ

mit n = 2-6, bevorzugt n = 2, und R = C₁-C₁₈-Alkyl und/oder C₆-C₁₈-Aryl, wobei n und R innerhalb des Moleküls gleich oder ungleich, bevorzugt gleich sein können, mit:
A) K = [R₄₋ᵢSi]
   mit i = 3-4, bevorzugt 4,
   oder
B) K = 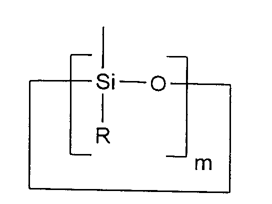 mit i = m und m = 3-6, bevorzugt m = 3,4
   in Kombination mit:
   - Y =: (OH) für a = 1 oder
   - Y =: [(CH₂)ₙSi(OH)R₂], [(CH₂)ₙSiR₃₋ₐ[(CH₂)ₙSi(OH)R₂]ₐ] und /oder [(CH₂)ₙSiR₃₋ₐ[(CH₂)ₙSiR₃₋ₐ[(CH₂)ₙSi(OH)R₂]ₐ]ₐ] für
   - a =: 1-3, bevorzugt a = 3,
mit mindestens einer Metall- und/oder Halbmetall-Verbindung, gegebenenfalls in Gegenwart einer Base und eines Lösemittels, umgesetzt wird.

In einer bevorzugten Form der Erfindung werden SiOH-funktionelle Carbosilan-Dendrimere der Formeln

Si[(CH₂)₂Si(CH₃)₂(OH)]₄,

Si[(CH₂)₂Si[(CH₂)₂Si(CH₃)₂(OH)]₃]₄,

Si[(CH₂)₃Si(CH₃)₂(OH)]₄

und/oder

[OSi(CH₃)(CH₂)₂Si(CH₃)₂(OH)]₄ eingesetzt.

Besonders bevorzugt ist der Einsatz von Si[(CH₂)₂Si(CH₃)₂(OH)]₄.

Die SiOH-funktionellen Carbosilan-Dendrimere werden vorzugsweise nach dem in DE-P 19603242.3 und DE-P 19603241.5 beschriebenen Verfahren hergestellt.

Die Metall- und/oder Halbmetall-Verbindungen im Sinne der Erfindung sind dadurch gekennzeichnet daß sie vorzugsweise mit mindestens einem Liganden Z mit Z = Cl, Br, I, OR (R = Alkyl, Aryl) substituiert sind und unter Abspaltung von HZ Si-O-Metall-Bindungen ausbilden. Außerdem können sie gegebenenfalls einen oder mehrere zusätzliche, für Metalle und/oder Halbmetalle gebräuchliche Substituenten tragen, beispielsweise lineare, verzweigte oder cyclische, gegebenenfalls substituierte Alkyl-, Cyclopentadienyl-, Aryl-, P-haltige Reste, wie z. B. Phosphane wie Triaryl- oder Trialkylphosphane, N-haltige Reste, wie z. B. Ethylendiamin, O-haltige Reste, wie z. B. Acetylacetonat oder Halogen, wie z. B. Chlorid usw. Bevorzugt sind Phosphan-, Metallcarbonyl-, Metallnitrosyl-, Metallocen-, Olefin-, und Alkin-Komplex-Verbindungen, besonders bevorzugt Metallocen-Verbindungen, ganz besonders bevorzugt Cp₂TiCl₂.

Als Basen im Sinne der Erfindung werden bevorzugt Triorganoamine eingesetzt, wobei die Organoreste alle gängigen C₁-C₁₈-Alkyl, C₆-C₁₈-Aryl und Phenylreste, linear oder verzweigt und gegebenenfalls substituiert, umfassen, bevorzugt Trialkylamine. Besonders bevorzugt entspricht Alkyl einem C₁-C₃-Rest. Die Basen werden stöchiometrisch oder im Überschuß eingesetzt.

Vorzugsweise wird das erfindungsgemäße Verfahren in einem Lösemittel durchgeführt. Als Lösemittel kommen alle gängigen organischen Lösemittel in Frage, z.B etherische Lösemittel wie z.B. THF, Diethylether und tert. Butylmethylether, Alkohole wie z.B. Methanol, Ethanol und Isopropanol, Ketone wie z.B. Aceton und Ethylmethylketon, Acetonitril und/oder Dimethylsulfoxid.

Das erfindungsgemäße Verfahren wird bei Temperaturen von -78°C bis zum Siedepunkt des entsprechenden Lösemittels durchgeführt, bevorzugt von -20°C bis zum Siedepunkt des entsprechenden Lösemittels, besonders bevorzugt von 0°C bis zum Siedepunkt des entsprechenden Lösemittels.

Bevorzugt wird das Verfahren als homogene Reaktion durchgeführt, d. h. in einem Lösemittel, in dem sich sowohl das SiOH-funktionelle Carbosilan-Dendrimer als auch die Metall- und/oder Halbmetall-Verbindung ohne Zersetzung lösen.

Gegenstand der vorliegenden Erfindung ist zudem die Verwendung der Carbosilan-Dendrimere mit Si-O-Metall-Bindungen als homogene oder heterogene Katalysatoren oder als Zusatz oder Bestandteil zur Herstellung oder Funktionalisierung von anorganisch-organischen Hybridmaterialien, z. B. zur Beschichtung.

### Ausführungsbeispiele:

### Vorbemerkung:

Die Synthese wurde mittels Schlenk-Technik unter Argon oder im Vakuum durchgeführt. THF und Triethylamin wurden nach den üblichen Labormethoden vor Gebrauch getrocknet und unter Argon destilliert. Cp₂TiCl₂ (käuflich) wurde zur Reinigung sublimiert.

Si[(CH₂)₂Si(CH₃)₂(OH)]₄ wurde nach DE-P 19603242.3 hergestellt.

### Beispiel: Synthese von Si[(CH₂)₂Si(CH₃)₂(OTiCp₂Cl)]₄

Zu einer Lösung von 11,35 g Cp₂TiCl₂ (45,6 mmol) in 500 ml THF wurde bei Raumtemperatur eine Lösung von 5 g Si[(CH₂)₂Si(CH₃)₂(OH)]₄ (11,34 mmol) in 150 ml THF getropft. Danach wurde 30 min bei Raumtemperatur gerührt und eine Lösung von 5,55 g NEt₃ (54,9 mmol) in 25 ml THF zugetropft. Anschließend wurde weitere 20 Stunden bei Raumtemperatur gerührt, wobei eine Farbänderung der Reaktionslösung von dunkelrot nach hellorange zu beobachten war und sich ein weißer Niederschlag von NEt₃*HCl bildete.

Das gebildete Salz wurde abfiltriert und alle flüchtigen Bestandteile im Vakuum abkondensiert. Man erhielt das Produkt als orangefarbenes Pulver.
- ¹H-NMR (d₈-THF): δ =: 0,08 ppm (s, 6H, SiCH₃); 0,58 ppm (m, 4H, SiCH₂); 6,29 ppm (s, 10H, TiC₅H₅).

IR (KBr-Verreibung), Bandenlagen in cm⁻¹: 300 vw, 370 m, 390 sh, 460 w, 600 w, 670 sh, 720 sh, 760 s, 810 vs, 840 sh, 950 vs, 1020 m, 1060 w, 1120 m, 1170 vw, 1250 s, 1360 w, 1400 m, 1440 m, 2900 m, 2950 m, 3100 w

## Patentansprüche

1. Carbosilan-Dendrimere mit Si-O-Metall-Bindungen der allgemeinen Formel
K[(CH₂)ₙSiXₐR₃₋ₐ]ᵢ
mit n = 2-6 und R = C₁-C₁₈-Alkyl und/oder C₆-C₁₈-Aryl, wobei n und R innerhalb des Moleküls gleich oder ungleich sein können, und wobei die weiteren Symbole und Indices die folgenden Bedeutungen haben:
A) K = [R₄₋ᵢSi]
mit i = 3,4
oder
B) K = 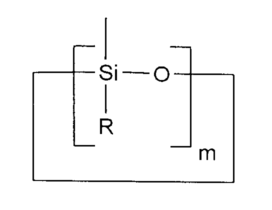 mit i = m und m = 3-6,
in Kombination mit
X = -OM für a=1 ,
oder
X= [(CH₂)ₙSi(OM)R₂], [(CH₂)ₙSiR₃₋ₐ[(CH₂)ₙSi(OM)R₂]ₐ]
und/oder [(CH₂)ₙSiR₃₋ₐ(CH₂)ₙSiR₃₋ₐ[(CH₂)ₙSi(OM)R₂]ₐ]ₐ] für a = 1-3, wobei
M ein Halbmetall und/oder Metall ist, das gegebenenfalls weitere Substituenten tragen kann.

2. Carbosilan-Dendrimere nach Anspruch 1, dadurch gekennzeichnet, daß diese
Si[(CH₂)₂Si(CH₃)₂(OM)]₄,
Si[(CH₂)₂Si[(CH₂)₂Si(CH₃)₂(OM)]₃]₄,
Si[(CH₂)₃Si(CH₃)₂(OM)]₄
und/ oder
[OSi(CH₃)(CH₂)₂Si(CH₃)₂(OM)]₄ sind.

3. Carbosilan-Dendrimere nach einem der Ansprüche 1 oder 2, dadurch gekennzeichnet, daß M gleich B, Al, Ga, In, Ge, Sn, Pb, As, Sb, Bi, Ti, Zr, Hf, V, Nb, Ta, Cr, Mo, W, Re, Fe, Ru, Os, Rh, Ir, Pt, Cu, Ag und/oder Au ist.

4. Carbosilan-Dendrimere nach einem oder mehreren der Ansprüche 1 bis 3, dadurch gekennzeichnet, daß M Ti, Zr und / oder Hf ist.

5. Verfahren zur Herstellung von Carbosilan-Dendrimeren nach einem oder mehreren der Ansprüche 1 bis 4, dadurch gekennzeichnet, daß ein SiOH-funktionelles Carbosilan-Dendrimer der Formel
K[(CH₂)ₙSiYₐR₃₋ₐ]ᵢ
mit n = 2-6 und R = C₁-C₁₈-Alkyl und/oder C₆-C₁₈-Aryl, wobei n und R innerhalb des Moleküls gleich oder ungleich sein können, mit
A) K = [R₄₋ᵢSi] mit i = 3,4
oder
B) K = 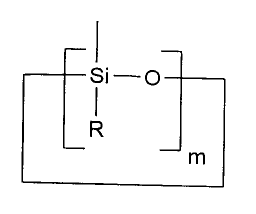 mit i = m und m = 3-6
in Kombination mit Y = OH für a = 1 oder
Y = [(CH₂)ₙSi(OH)R₂], [(CH₂)ₙSiR₃₋ₐ[(CH₂)ₙSi(OH)R₂]ₐ]
und /oder [(CH₂)ₙSiR₃₋ₐ[(CH₂)ₙSiR₃₋ₐ[(CH₂)ₙSi(OH)R₂]ₐ]ₐ] für a = 1-3,
mit mindestens einer Metall- und/oder Halbmetall-Verbindung, gegebenenfalls in Gegenwart einer Base, umgesetzt wird.

6. Verfahren zur Herstellung von Carbosilan-Dendrimeren nach Anspruch 5, dadurch gekennzeichnet, daß als SiOH-funktionelles Carbosilan-Dendrimer
Si[(CH₂)₂Si(CH₃)₂(OH)]₄
Si[(CH₂)₂Si[(CH₂)₂Si(CH₃)₂(OH)]₃]₄
Si[(CH₂)₃Si(CH₃)₂(OH)]₄
und / oder
[OSi(CH₃)(CH₂)₂Si(CH₃)₂(OH)]₄ eingesetzt wird.

7. Verfahren zur Herstellung von Carbosilan-Dendrimeren nach einem oder mehreren der Ansprüche 5 bis 6, dadurch gekennzeichnet, daß die Metall- und/oder Halbmetall-Verbindungen mit mindestens einem Liganden Z mit Z = Cl, Br, I, OR (R = Alkyl, Aryl) substituiert sind und unter Abspaltung von HZ Si-O-M-Bindungen ausbilden.

8. Verfahren zur Herstellung von Carbosilan-Dendrimeren nach einem oder mehreren der Ansprüche 5 bis 7, dadurch gekennzeichnet, daß als Basen Triorganoamine eingesetzt werden.

9. Verwendung der Carbosilan-Dendrimere nach einem oder mehreren der Ansprüche 1 bis 4 als homogene oder heterogene Katalysatoren oder als Zusatz oder Bestandteil zur Herstellung oder Funktionalisierung von anorganisch-organischen Hybridmaterialien.
